# EUROPÄISCHE PATENTSCHRIFT

(11) **EP 1 332 264 B1**
(45) Veröffentlichungstag und Bekanntmachung des Hinweises auf die Patenterteilung: **23.08.2006**
(21) Anmeldenummer: 01993738.2
(22) Anmeldetag: 05.11.2001
(51) Int. Cl.: E05D 5/02, F16B 5/02

(54) **SCHRAUBELEMENT FÜR DIE BEFESTIGUNG EINES BESCHLAGTEILS AN EINEM MIT EINEM VORGESETZTEN PROFILTEIL VERSEHENEN HOHLPROFIL**
SCREW ELEMENT FOR FIXING A FITTING TO A HOLLOW PROFILE WHICH IS PROVIDED WITH A PROJECTING PROFILED PART
ELEMENT DE VIS POUR FIXER UN ELEMENT DE FERRURES SUR UN PROFILE CREUX POURVU D'UNE PARTIE PROFILEE SAILLANTE

(30) Priorität: 07.11.2000 DE 20018984 U
(43) Veröffentlichungstag der Anmeldung: 06.08.2003
(73) Patentinhaber: Dr. Hahn GmbH & Co. KG, D-41189 Mönchengladbach (DE)
(72) Erfinder: BÖGEL-PÖTTER, Jürgen, D-41849 Wassenberg (DE); HERGLOTZ, Tibor, 52372 Kreuzau (DE)
(74) Vertreter: Kluin, Jörg-Eden
(86) Internationale Anmeldenummer: PCT/EP2001/012795
(87) Internationale Veröffentlichungsnummer: WO 2002/038897

(56) Entgegenhaltungen:
- EP-A- 0 811 773
- DE-C- 3 521 783
- DE-C- 19 607 029
- DE-U- 29 502 068
- GB-A- 2 069 592

## Beschreibung

Die Erfindung bezieht sich auf ein Schraubelement der dem Oberbegriff des Anspruchs 1 entsprechenden Art.

In zunehmendem Umfang werden für Türen und Fenster Zargen aus einem Hohlprofil aus Kunststoff verwendet, in welches ein Metallprofil zur Verstärkung eingesetzt ist. Dabei handelt es sich um sogenannte Mehrkammerprofile, die sich aufgrund der der Armierung vorgelagerten Kammern durch sehr gute Wärmedämmeigenschaften auszeichnen.

Die Festlegung eines Beschlagteils mittels einer Schraube kann nicht an dem vorgesetzten Profil erfolgen, weil sonst die erheblichen durch das Beschlagteil übertragenen Kräfte von dem Kunststoffprofil aufgenommen werden müßten, wozu diese jedoch nicht geeignet sind. Die Festlegung erfolgt daher durch Verschraubung mit dem zur Anlagefläche des Beschlagteils entfernten Metallprofil.

Bei diesem Profilaufbau müßten die dem Metallprofil vorgelagerten Hohlkammern im Bereich der Bandbefestigung durch geeignete Materialien (Holz, Kunststoff, Metall etc.) ausgefüttert werden, damit sich die Hohlkammern beim Verschrauben nicht verformen. Dieses Ausfüttern wird erfahrungsgemäß nicht vorgenommen, weil die Kunststoffprofile innen nicht kalibriert werden können und daher maßlich sehr starke Schwankungen aufweisen, die ein ständiges Anpassen solcher Futterstücke erforderlich machen würden.

Dem Oberbegriff des Anspruchs 1 liegt der Stand der Technik nach der DE 295 02 068 U1, Fig. 4 zugrunde. Hierbei hat das Schraubelement einen Kopf, der das Beschlagteil gegen die vordere Profilwandung drückt. Die Festlegung ist also durch die Festigkeit des Schraubeingriffs bestimmt, die bei der Metallamierung höher ist als bei Kunststoff-Profilwandungen. Es besteht daher in der bekannten Ausführungsform die Gefahr der Verformung des vorgesetzten Profilteils bei festem Anziehen.

Aufgabe der Erfindung ist es daher, eine sichere Befestigung von Beschlagteilen an Profilen der in Rede stehenden Art zu schaffen, bei der keine Gefahr der Verformung von Teilen der Kunststoffprofile besteht.

Diese Aufgabe wird durch die im Anspruch 1 wiedergegebene Erfindung gelöst.

Das Schraubelement greift mit seinen Außengewinden in die Vorderwandung des Profilteils und in die Wandungen des Hohlprofils und seiner Metallamierung, ein. Es kann von vorn auf einfache Weise in das Hohlpofil eingeschraubt werden. Die erheblichen durch das Beschlagteil eingeleiteten Kräfte werden von dem Schraubelement aufgenommen und an die Metallamierung weitergeleitet. Die einen Bestandteil des Schraubelements bildende Schraube kann beliebig fest angezogen werden, ohne das vorgesetzte Profilteil mit den Anzugskräften zu belasten.

Bei der Ausführung nach Anspruch 2 ist das Schraubelement einteilig ausgeführt.

Bei einer Ausführungsform nach Anspruch 3 können die Bereiche unterschiedlichen Durchmessers über einen beispielsweise konisch (Anspruch 4) ausgebildeten Übergangsbereich ineinander übergehen, um so die Einführung des Schraubelements zu erleichtern.

Gemäß Anspruch 5 empfiehlt sich eine Anpassung des Außengewindes an die Metall-Kunststoff-Paarung, da das Schraubelement Wandungen aus beiden Materialien durchgreifen muß.

Weitere Einzelheiten, Merkmale und Vorteile der vorliegenden Erfindung ergeben sich aus der unten mit Bezug zu den Zeichnungen abgegebenen Beschreibung. Es zeigen:
- Fig. 1: einen Horizontalschnitt durch einen Türrahmen mit einem daran mit Hilfe eines Schraubelements befestigten Beschlagteil, teilweise im Schnitt und
- Fig. 2: eine Weiterbildung der Ausführungsform des Schraubelements gemäß Fig. 1.

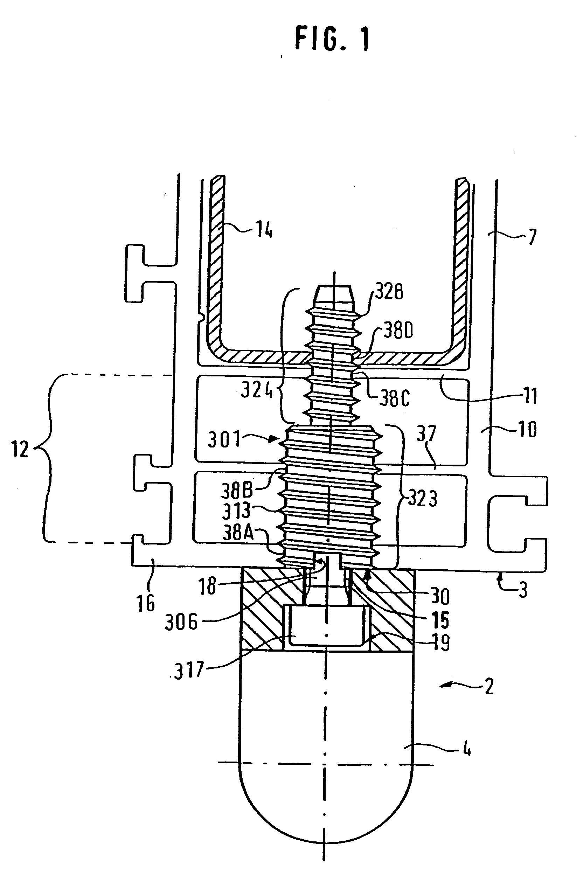

Gemäß Fig. 1 soll an einem feststehenden Rahmen 3 mittels eines nur angedeuteten Bandes 2 ein nicht dargestellter Flügelrahmen schwenkbar gelagert werden. Das Band 2 umfaßt einen das an dem feststehenden Rahmen 3 anzubringende Beschlagteil 4 bildenden Bandlappen, der mittels einer Schraube 306, die mit ihrem Kopf 317 in einer geeigneten Ausnehmung 19 des Beschlagteils sitzt, an dem Rahmen 3 befestigt werden soll.

Dem Hohlprofil 7 des feststehenden Rahmens 3 ist auf der Wetterseite ein Kunststoff-Profilteil 10 vorgelagert, der gegenüber der dem Beschlagteil 4 zugewandten inneren Wandung 11 des Hohlprofils 7 einen Abstand 12 beläßt, der in diesem Fall aus zwei von einer Wandung 37 getrennten Kammern besteht. Den wetterseitigen Abschluß bildet eine Vorderwandung 16. Der Abstand 12 wird durch das Kunststoffprofilteil 10 aufrechterhalten, so daß der Wärmeübergang zwischen der dem Wetter ausgesetzten Vorderwandung 16, und dem ebenfalls aus Kunststoff bestehenden Hohlprofil 7 verringert und eine sogenannte Kältebrücke vermieden wird.

Das Innere des Hohlprofils 7 ist auf der dem Beschlagteil abgewandten Seite der Wandung 11 mit einer Metallarmierung 14 versehen, die zur Verstärkung des aus Kunststoff bestehenden Hohlprofils 7 und zur Aufnahme etwaiger durch das Beschlagteil 4 eingeleiteter Zugkräfte dient.

Um die Kräfte der Befestigung des Beschlagteils 4 jedenfalls zu einem Teil über den Abstand 12 hinweg auf die Metallarmierung 14 zu übertragen, ist ein Schraubelement 301 mit einem Außengewinde vorgesehen, welches die Vorderwandung 16 und über den Zwischenraum 12 hinweg die Wandungen 37 und 11 durchgreift und in das Hohlprofil 7 sowie dessen Metallarmierung 14 eingreift.

Das Schraubelement 301 wird mit einem geeigneten Werkzeug welches in dem Querschlitz 18 angreift, in die jeweils etwas kleiner ausgeführten Bohrungen 38A der Vorderwandungen 16, 38B der Wandung 37, 38C der Wandung 11 und 38D der Metallamierung 14 eingeschraubt, so daß seine Stirnseite 30 mit der Vorderseite des Profils 16 bündig abschließt. Die Länge des Schraubelements 301 ist dabei so gewählt, daß es beim Einschrauben sowohl alle vier auf einer Linie liegenden Bohrungen 38 A, B, C, D durchgreift als auch in das Innere der Metallarmierung 14 eingreift.

Der Befestigung des an dem Schraubelement 301 angeordneten Beschlagteils 4 dient eine Schraube 306. Dazu weist das Schraubelement 301 eine zentrische Bohrung auf, die mit einem metrischen Gewinde versehen ist, welches an das ebenfalls metrische Außengewinde 15 der Schraube 306 angepaßt ist.

Nach dem Festziehen der Schraube 6 wird also die vom Beschlagteil 4 herrührende Kraft auf die Stirnseite 30 des Schraubelements 301 von der der Vorderwandung des Profilteils 16 zugewandten Seite des Beschlagteils 4 übertragen. Somit werden die Kunststoffprofile 7 und 10 entlastet und Zugkräfte von der Metallarmierung 14 aufgenommen. Ferner wird verhindert, daß sich das vorgesetzte Profil 10 verformt.

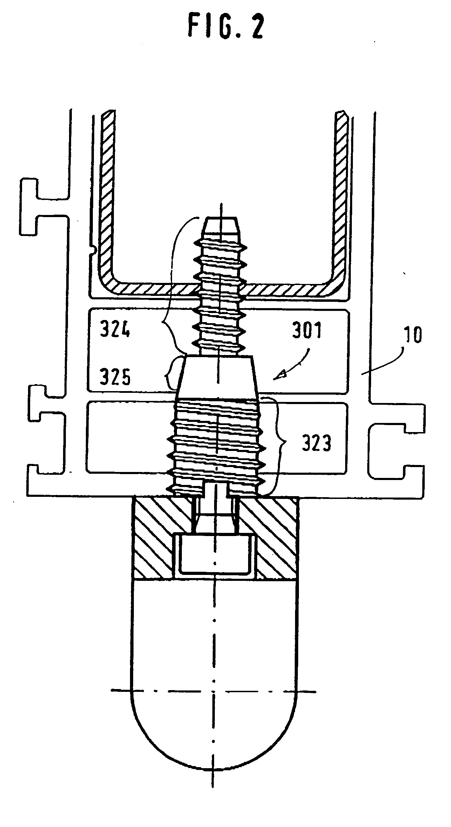

Die Länge des Schraubelements 301 ist so bemessen, daß es den Abstand 12 überbrückt. Da es in gewissen Grenzen beliebig weit in das Hohlprofil 7 eingreifen kann, muß seine Länge nicht an das jeweilige Profil angepaßt werden. Die Schraube 306 kann bei den in Fig. 1 und 2 dargestellten Ausführungsbeispieten immer die gleiche kurze Länge aufweisen, die zur Einleitung der von dem Beschlagteil auf das Profil zu übertragenden Kräfte ausreicht.

Das Außengewinde des Schraubelements 301 besitzt zwei Bereiche 323, 324 unterschiedlichen Durchmessers.

Der erste Bereich 323 des Schraubelements 301 durchgreift mit seinem Außengewinde 313 nur die Vorderwandung 16 und die Wandung 37 und endet im Raum zwischen der Wandung 37 des Profils 10 und der Wandung 11 des Hohlprofils 7.

Der zweite Bereich 324 des Schraubelements 301 besitzt einen kleineren Durchmesser als der erste Bereich 323 und sein Außengewinde 328 besitzt den gleichen Drehsinn wie das Gewinde 313. Der zweite Bereich 324 durchgreift die Bohrungen 38 C, D und greift in das Hohlprofil 7 bzw. dessen Metallarmierung 14 ein. Dabei sind die Bohrungen 38 C, D an den geringeren Durchmesser des zweiten Bereichs 324 angepaßt, welches am geeignetsten durch den Einsatz eines Stufenbohrers zu erreichen ist.

Das Schraubelement 301 wird mit einem geeigneten Werkzeug, welches in dem Querschlitz 18 angreift, eingeschraubt, bis seine Stirnseite 30 mit der Vorderseite des Profils 16 bündig abschließt.

Die Schraube 306 kann bei dem in Fig. 1 und 2 dargestellten Ausführungsbeispiel immer die gleiche kurze Länge aufweisen, die zur Einleitung der von dem Beschlagteil auf das Profil zu übertragenden Kräfte ausreicht, darf jedoch nicht zu lang sein, da die entsprechende Gewindebohrung 15 in dem erste Bereich 323 des Schraubelements 301 aufgrund des geringeren Durchmessers des zweiten Bereichs 324 keine durchgehende Bohrung ist.

Sowohl das Außengewinde 313 als auch das Außengewinde 328 sind mit ihren Flankenformen an die Materialpaarung Metall/Kunststoff angepaßt, so daß die Schraube 306 selbstschneidend in die jeweils etwas kleiner ausgeführte Bohrung 38A, 38B, 38C in Kunststoff und auch 38D in Metall hineingedreht werden kann.

Bei der Weiterbildung gemäß Fig. 2 ist zwischen den Bereichen 323, 324 ein Übergangsbereich 325 vorgesehen, in dem sich der Bereich 324 kleineren Durchmessers in den Bereich 323 größeren Durchmessers erweitert. In dem dargestellten Ausführungsbeispiel ist der Übergangsbereich 325 konisch ausgebildet. Durch diese Maßnahme ist das Einbringen des Schraubelements 301 in das Profil erleichtert.

## Patentansprüche

1. Schraubelement (301) für die Befestigung eines Beschlagteils (4) an einem mit einem vorgesetzten Profilteil (10) versehenen metallarmierten Hohlprofil (7), wobei zwischen dem die Auflagefläche (16) des Beschlagteils (4) bildenden Profilteil (10) und der Wandung (11) des Hohlprofils (7) ein Zwischenraum (12) besteht,
wobei das Schraubelement (301) im eingebauten Zustand das Beschlagteil (4) und den Zwischenraum (12) durchgreift und in das Hohlprofil (7) und seine Metallarmierung (14) eingreift,
und wobei das Schraubelement (301) ein Außengewinde (313) mit zwei Bereichen (323, 324) unterschiedlichen Durchmessers, jedoch gleichen Drehsinns, aufweist, von denen der Bereich (323) in das vorgesetzte Profilteil (10) und der zweite Bereich (324) mit dem kleineren Durchmesser in das metallarmierte Hohlprofil (7) einschraubbar sind
**dadurch gekennzeichnet, daß**
das Schraubelement als Buchse mit einer Ausnehmung ausgeführt ist, wobei das Schraubelement mit einer axialen Anlagefläche (30) im eingebauten Zustand vom Hohlprofil (7) her in Richtung gegen das Beschlagteil (4) gerichtet anliegt und die Ausnehmung ein Innengewinde aufweist, in welches eine das Beschlagteil (4) durchgreifende und einen Bestandteil des Schraubelements (301) bildende Schraube einschraubbar ist,

2. Schraubelement nach Anspruch 1, **dadurch gekennzeichnet, daß** es einteilig ausgebildet ist.

3. Schraubelement nach Anspruch 1 oder 2, **dadurch gekennzeichnet, daß** zwischen dem Bereich (324) kleineren Durchmessers und dem Bereich (323) größeren Durchmessers ein sich von dem Bereich (324) kleineren Durchmessers zu dem Bereich (323) größeren Durchmessers erweiternder Übergangsbereich (325) vorgesehen ist.

4. Schraubelement nach Anspruch 3, **dadurch gekennzeichnet, daß** der Übergangsbereich (325) konisch ausgebildet ist.

5. Schraubelement nach einem der Ansprüche 1 bis 4 **dadurch gekennzeichnet, daß** die Flankenform des Außengewindes (313) an die Metall-Kunststoff-Paarung angepaßt ist.

## Claims

1. Screw element (301) for fixing a fitting (4) to a metal-reinforced hollow profile (7) provided with a frontal profiled part (10), wherein between the profiled part (10) forming the support surface (16) for the fitting (4) and the wall (11) of the hollow profile (7) there is an interspace (12),
wherein the screw element (301), in the fitted state, extends through the fitting (4) and the interspace (12) and engages in the hollow profile (7) and its metal reinforcement (14),
and wherein the screw element (301) has an external thread (313) having two regions (323, 324) of different diameter yet of the same direction of rotation, whereof the region (323) can be screwed into the frontal profiled part (10) and the second region (324) having the smaller diameter can be screwed into the metal-reinforced hollow profile (7),
**characterized in that**
the screw element is constructed as a bushing with a recess, wherein the screw element sits with an axial bearing surface (30), in the fitted state, facing away from the hollow profile (7) in the direction of the fitting (4), and the recess has an internal thread into which a screw, which extends through the fitting (4) and forms a component part of the screw element (301), can be screwed.

2. Screw element according to Claim 1, **characterized in that** it is configured in one piece.

3. Screw element according to Claim 1 or 2, **characterized in that** between the region (324) of smaller diameter and the region (323) of larger diameter there is provided a transition region (325) which widens from the region (324) of smaller diameter to the region (323) of larger diameter.

4. Screw element according to Claim 3, **characterized in that** the transition region (325) is conically configured.

5. Screw element according to one of Claims 1 to 4, **characterized in that** the flank profile of the external thread (313) is matched to the metal-plastic pairing.

## Revendications

1. Elément de vis (301) pour la fixation d'une pièce de ferrure (4) à un profilé creux (7) armé par du métal, muni d'une partie profilée (10), en avant, et
entre la partie profilée (10) formant la surface d'appui (16) de la pièce de ferrure (4) et la paroi (11) du profilé creux (7), il subsiste un espace intermédiaire (12),
l'élément de vis (301), à l'état installé, traverse la pièce de ferrure (4) et l'espace intermédiaire (12) et pénètre dans le profilé creux (7) et dans son armature en métal (14) et
l'élément de vis (301) comporte un filetage extérieur (313) ayant deux zones (323, 324) de diamètres différents mais de même sens de vissage, et la zone (323) se visse dans la partie profilée (10) en avant et la seconde zone (324), de diamètre plus petit, se visse dans le profilé creux (7) armé par du métal,
**caractérisé en ce que**
l'élément de vis est réalisé sous la forme d'une douille munie d'une cavité et
l'élément de vis s'appuie par une surface d'appui axiale (30) à l'état installé, dirigée contre la pièce de ferrure (4) à partir du profilé creux (7) et
la cavité comporte un filetage intérieur dans lequel se visse une vis traversant la partie de ferrure (4) et faisant partie de l'élément de vis (301).

2. Elément de vis selon la revendication 1,
**caractérisé en ce qu'**
il est en une seule pièce.

3. Elément de vis selon la revendication 1 ou 2,
**caractérisé en ce qu'**
il est muni d'une zone transitoire (325) dont le diamètre augmente entre la zone (324) de petit diamètre et la zone (323) de plus grand diamètre, cette zone transitoire étant prévue entre la zone (324) de petit diamètre et la zone (323) de grand diamètre.

4. Elément de vis selon la revendication 3,
**caractérisé en ce que**
la zone transitoire (325) est de forme conique.

5. Elément de vis selon l'une des revendications 1 à 4,
**caractérisé en ce que**
la forme des flancs du filetage extérieur (313) est adaptée à la paire métal-matière plastique.
